# EUROPEAN PATENT APPLICATION

(11) **EP 4 827 184 A1**
(43) Date of publication of application: **21.10.2026**
(21) Application number: 25751018.0
(22) Date of filing: 03.01.2025
(51) Int. Cl.: H04W 52/02

(54) **COMMUNICATION METHOD AND RELATED DEVICE**

(30) Priority: 07.02.2024 CN 202410174545
(71) Applicant: Honor Device Co., Ltd., Shenzhen, Guangdong 518040 (CN)
(72) Inventor: SHAN, Baokun, Shenzhen, Guangdong 518040 (CN)
(74) Representative: Henselmann, Alexander Gerhard
(86) International application number: PCT/CN2025/070425
(87) International publication number: WO 2025/167416

(57) **Abstract**

This application provides a communication method and a related device, to reduce power consumption of a network device. The communication method applied to the network device includes: sending first information to a terminal device, where the first information is used to activate a first cell discontinuous transmission mechanism of a first multicast service configured by the network device and/or a second cell discontinuous transmission mechanism of a first broadcast service configured by the network device.

## Description

This application claims priority to Chinese Patent Application No. 202410174545.8, filed with the China National Intellectual Property Administration on February 7, 2024 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

With continuous development of the information era and popularization and application of network communication, green communications (green communications) has become a topic with great attention. The green communications aims to reduce power consumption of a communication system, reduce generation of electronic wastes, and improve efficient utilization of resources. How to reduce power consumption of a communication device has attracted wide attention.

In a related communication method, for a multicast service or broadcast service scenario, a network device sends same data to a plurality of terminal devices simultaneously. The network device continuously maintains a downlink to send data, constantly consuming power. As a result, power consumption is high. There is currently no related mechanism to resolve this problem.

### SUMMARY

This application provides a communication method and a related device, to reduce power consumption of a network device.

According to a first aspect, this application provides a communication method, the method is applied to a network device, and the method includes:

The network device sends first information to a terminal device, where the first information is used to activate a first cell (cell) discontinuous transmission (discontinuous transmission, DTX) mechanism of a first multicast service configured by the network device and/or a second cell discontinuous transmission mechanism of a first broadcast service configured by the network device. A multicast service is a point-to-multipoint communication service. In a multicast service scenario, the network device sends same data to a plurality of terminal devices. A broadcast service is a point-to-all-point communication service. In a broadcast service scenario, the network device sends same data to all terminal devices connected to the network device. A cell discontinuous mechanism defines an active (active) period and an inactive period for the network device to transmit service data. The network device transmits the service data to the terminal device only in the active period. To be specific, the network device sends multicast service data to the terminal device only in a first active period defined by the first cell discontinuous transmission mechanism, and the network device sends broadcast service data to the terminal device only in a second active period defined by the second cell discontinuous transmission mechanism. The activation herein means that the terminal device receives related service data based on a cell discontinuous transmission mechanism configured by the network device. To be specific, after the first cell discontinuous transmission mechanism is activated, the multicast service data sent by the network device is expected to be received in the first active period defined by the first cell discontinuous transmission mechanism; and after the second cell discontinuous transmission mechanism is activated, the broadcast service data sent by the network device is expected to be received in the second active period defined by the second cell discontinuous transmission.

It can be learned based on the foregoing descriptions that this application has the following beneficial effects: After the network device configures a cell discontinuous transmission mechanism of the multicast service and/or a cell discontinuous transmission mechanism of the broadcast service, information used to activate the cell discontinuous transmission mechanism is sent to the network device, so that the cell discontinuous transmission mechanism takes effect. Therefore, during transmission of a related service between the network device and the terminal device, related service data does not need to be continuously transmitted, but transmitted in a specific time period according to a definition of the cell discontinuous transmission mechanism, to reduce power consumption of the network device.

In some optional implementations of the first aspect, the first information further includes configuration information, and the configuration information indicates the first cell discontinuous transmission mechanism and/or the second cell discontinuous transmission mechanism configured by the network device. In other words, when the network device sends the configuration information to the terminal device, it indicates that the configuration information takes effect. Alternatively, for the terminal device, when the terminal device receives the configuration information, it is determined that the configuration takes effect. Therefore, the network device sends the multicast service data and/or the broadcast service data to the terminal device based on a corresponding cell discontinuous transmission mechanism. Correspondingly, the terminal device also receives the multicast service data and/or the broadcast service data in a corresponding active period based on the corresponding cell discontinuous transmission mechanism.

In this application, the cell discontinuous transmission mechanism of the multicast service and/or the cell discontinuous transmission mechanism of the broadcast service are/is included in the configuration information, so that after sending the configuration information, the network device can transmit the related multicast service and/or broadcast service based on the configured cell discontinuous transmission mechanism, without waiting, thereby reducing a transmission delay and improving efficiency.

In some optional implementations of the first aspect, before sending the first information to the terminal device, the network device further sends configuration information to the terminal device, where the configuration information indicates the first cell discontinuous transmission mechanism and/or the second cell discontinuous transmission mechanism configured by the network device. The network device then sends a first paging message to the terminal device, where the first paging message includes the first information. To be specific, the first cell discontinuous transmission mechanism and/or the second cell discontinuous transmission mechanism configured by the network device are/is activated in the first paging message. In other words, the network device separately sends the configuration information and activation information to the terminal device.

In this application, there are a plurality of possible manners of activating the cell discontinuous transmission mechanism of the multicast service and/or the cell discontinuous transmission mechanism of the broadcast service. This enriches implementations and application scenarios of the technical solutions of this application and improves flexibility of the technical solutions. In addition, in a solution in which the network device separately sends the configuration information and the activation information to the terminal device, effective time of the cell discontinuous transmission mechanism of the multicast service and/or the cell discontinuous transmission mechanism of the broadcast service can be flexibly controlled, thereby further improving practicability of the technical solutions.

In some optional implementations of the first aspect, after sending the first information to the terminal device, the network device may further send a second paging message to the terminal device, where the second paging message is used to deactivate the first cell discontinuous transmission mechanism and/or the second cell discontinuous transmission mechanism. The deactivation means that the network device no longer sends related multicast service data and/or broadcast service data to the terminal device based on a related discontinuous transmission mechanism, and the terminal device no longer receives the related multicast service data and/or broadcast service data from the network device based on the related discontinuous transmission mechanism.

This application further provides a solution for deactivating the cell discontinuous transmission mechanism of the multicast service and/or the cell discontinuous transmission mechanism of the broadcast service, to flexibly adapt to different requirements, thereby further improving practicability of the technical solutions.

According to a second aspect, this application provides a communication method, the method is applied to a terminal device, and the method includes:

The terminal device receives first information from a network device, where the first information is used to activate a first cell discontinuous transmission mechanism of a first multicast service configured by the network device and/or a second cell discontinuous transmission mechanism of a first broadcast service configured by the network device. The terminal device activates the first cell discontinuous transmission mechanism and/or the second cell discontinuous transmission mechanism based on the first information. Activating the first cell discontinuous transmission mechanism means that the terminal device expects to receive, in a first active period defined by the first cell discontinuous transmission mechanism, multicast service data sent by the network device. Activating the second cell discontinuous transmission mechanism means that the terminal device expects to receive, in a second active period defined by the second cell discontinuous transmission, broadcast service data sent by the network device.

It can be learned based on the foregoing descriptions that this application has the following beneficial effects: After the network device configures a cell discontinuous transmission mechanism of the multicast service and/or a cell discontinuous transmission mechanism of the broadcast service, information used to activate the cell discontinuous transmission mechanism is sent to the network device, so that the cell discontinuous transmission mechanism takes effect. Therefore, during transmission of a related service between the terminal device and the network device, a related data receiving function does not need to be continuously enabled, but is enabled in a specific time period according to a definition of a cell discontinuous transmission mechanism, to reduce power consumption of the terminal device.

In some optional implementations of the second aspect, the first information further includes configuration information, and the configuration information indicates the first cell discontinuous transmission mechanism and/or the second cell discontinuous transmission mechanism configured by the network device. In other words, when the network device sends the configuration information to the terminal device, it indicates that the configuration information takes effect. In this case, for the terminal device, when the terminal device receives the configuration information, it is determined that the configuration takes effect. The terminal device receives the multicast service data and/or the broadcast service data in a corresponding active period based on the corresponding cell discontinuous transmission mechanism.

In this application, the cell discontinuous transmission mechanism of the multicast service and/or the cell discontinuous transmission mechanism of the broadcast service are/is included in the configuration information, so that after receiving the configuration information, the terminal device can transmit the related multicast service and/or broadcast service based on the configured cell discontinuous transmission mechanism, without waiting, thereby reducing a transmission delay and improving efficiency.

In some optional implementations of the second aspect, the terminal device may further receive the configuration information from the network device, and the configuration information indicates the first cell discontinuous transmission mechanism and/or the second cell discontinuous transmission mechanism configured by the network device. After the configuration information from the network device is received, a first paging message is received, where the first paging message includes the first information. To be specific, the first cell discontinuous transmission mechanism and/or the second cell discontinuous transmission mechanism configured by the network device are/is activated in the first paging message. In other words, the terminal device separately receives the configuration information and activation information from the network device.

In this application, there are a plurality of possible manners of activating the cell discontinuous transmission mechanism of the multicast service and/or the cell discontinuous transmission mechanism of the broadcast service. This enriches implementations and application scenarios of the technical solutions of this application and improves flexibility of the technical solutions. In addition, in a solution in which the network device separately sends the configuration information and the activation information to the terminal device, effective time of the cell discontinuous transmission mechanism of the multicast service and/or the cell discontinuous transmission mechanism of the broadcast service can be flexibly controlled, thereby further improving practicability of the technical solutions.

In some optional implementations of the second aspect, after receiving the first information from the network device, the terminal device may further receive a second paging message from the network device, where the second paging message is used to deactivate the first cell discontinuous transmission mechanism and/or the second cell discontinuous transmission mechanism. The deactivation means that the terminal device no longer receives related multicast service data and/or broadcast service data from the network device based on a related discontinuous transmission mechanism.

This application further provides a solution for deactivating the cell discontinuous transmission mechanism of the multicast service and/or the cell discontinuous transmission mechanism of the broadcast service, to flexibly adapt to different requirements, thereby further improving practicability of the technical solutions.

In some optional implementations of the first aspect or the second aspect, the first paging message includes a first activation instruction, and the first activation instruction is used to activate a cell discontinuous transmission mechanism corresponding to a first group. The first group includes the terminal device, and the cell discontinuous transmission mechanism corresponding to the first group includes the first cell discontinuous transmission mechanism and/or the second cell discontinuous transmission mechanism. In other words, the first paging message is a message for activating the first group separately.

In this application, the cell discontinuous transmission mechanism corresponding to the first group may be separately activated in the first paging message, to avoid interference to a service of another group, thereby improving reliability of the technical solutions in this application.

In some optional implementations of the first aspect or the second aspect, the first paging message includes a second activation instruction, and the second activation instruction is used to activate cell discontinuous transmission mechanisms of a plurality of multicast services transmitted by the network device and/or cell discontinuous transmission mechanisms of a plurality of broadcast services transmitted by the network device. In other words, the first paging message may be used to simultaneously activate the cell discontinuous transmission mechanisms of the plurality of multicast services and/or the cell discontinuous transmission mechanisms of the plurality of broadcast services. The first multicast service is included in the plurality of multicast services, and the first broadcast service is included in the plurality of broadcast services.

In this application, the first paging message may be used to simultaneously activate the cell discontinuous transmission mechanisms of the plurality of multicast services and/or the cell discontinuous transmission mechanisms of the plurality of broadcast services, without activating each multicast service or each broadcast service separately. This not only can improve efficiency, but also can reduce a data transmission amount between the network device and the terminal device, thereby reducing occupation of network resources.

In some optional implementations of the first aspect or the second aspect, the first paging message includes a third activation instruction and/or a fourth activation instruction. The third activation instruction is used to activate cell discontinuous transmission mechanisms of a plurality of multicast services transmitted by the network device, and the first multicast service is included in the plurality of multicast services. The fourth activation instruction is used to activate cell discontinuous transmission mechanisms of a plurality of broadcast services transmitted by the network device, and the first multicast service is included in the plurality of broadcast services. In other words, in the first paging message, the instruction used to activate the cell discontinuous mechanism of the multicast service and the instruction used to activate the cell discontinuous mechanism of the broadcast service are decoupled from each other and do not interfere with each other.

In this application, the instruction for activating the cell discontinuous transmission mechanism of the multicast service may be decoupled from the instruction for activating the cell discontinuous transmission mechanism of the broadcast service. In actual application, in a same paging message, different services may be activated or not without interference, to improve reliability of the technical solutions, and further enrich implementations of the technical solutions of this application.

In some optional implementations of the first aspect or the second aspect, the second paging message includes a first deactivation instruction, and the first deactivation instruction is used to deactivate the cell discontinuous transmission mechanism corresponding to the first group. The first group includes the terminal device, and the cell discontinuous transmission mechanism corresponding to the first group includes the first cell discontinuous transmission mechanism and/or the second cell discontinuous transmission mechanism.

In this application, the cell discontinuous transmission mechanism corresponding to the first group may be separately deactivated in the second paging message, to avoid interference to a service of another group, thereby improving reliability of the technical solutions in this application.

In some optional implementations of the first aspect or the second aspect, the second paging message includes a second deactivation instruction, and the second deactivation instruction is used to deactivate the cell discontinuous transmission mechanisms of the plurality of multicast services transmitted by the network device and/or the cell discontinuous transmission mechanisms of the plurality of broadcast services transmitted by the network device. In other words, the second paging message may be used to simultaneously deactivate the cell discontinuous transmission mechanisms of the plurality of multicast services and/or the cell discontinuous transmission mechanisms of the plurality of broadcast services. The first multicast service is included in the plurality of multicast services, and the first broadcast service is included in the plurality of broadcast services.

In this application, the second paging message may be used to simultaneously deactivate the cell discontinuous transmission mechanisms of the plurality of multicast services and/or the cell discontinuous transmission mechanisms of the plurality of broadcast services, without deactivating each multicast service or each broadcast service separately. This not only can improve efficiency, but also can reduce a data transmission amount between the network device and the terminal device, thereby reducing occupation of network resources.

In some optional implementations of the first aspect or the second aspect, the second paging message includes a third deactivation instruction and/or a fourth deactivation instruction. The third deactivation instruction is used to deactivate the cell discontinuous transmission mechanisms of the plurality of multicast services transmitted by the network device, and the first multicast service is included in the plurality of multicast services. The fourth deactivation instruction is used to deactivate the cell discontinuous transmission mechanisms of the plurality of broadcast services transmitted by the network device, and the first broadcast service is included in the plurality of broadcast services. In other words, in the second paging message, the instruction used to deactivate the cell discontinuous mechanism of the multicast service and the instruction used to deactivate the cell discontinuous mechanism of the broadcast service are decoupled from each other and do not interfere with each other.

In this application, the instruction for deactivating the cell discontinuous transmission mechanism of the multicast service may be decoupled from the instruction for deactivating the cell discontinuous transmission mechanism of the broadcast service. In actual application, in a same paging message, different services may be activated or not without interference, to improve reliability of the technical solutions, and further enrich implementations of the technical solutions of this application.

According to a third aspect, this application provides a network device, including:
a transceiver unit, configured to send first information to a terminal device, where the first information is used to activate a first cell discontinuous transmission mechanism of a first multicast service configured by the network device and/or a second cell discontinuous transmission mechanism of a first broadcast service configured by the network device.

In some optional implementations of the third aspect, the first information is included in a first paging message. The transceiver unit is further configured to send configuration information to the terminal device, where the configuration information indicates the first cell discontinuous transmission mechanism and/or the second cell discontinuous transmission mechanism configured by the network device.

In some optional implementations of the third aspect, the transceiver unit is further configured to send a second paging message to the terminal device, where the second paging message is used to deactivate the first cell discontinuous transmission mechanism and/or the second cell discontinuous transmission mechanism.

According to a fourth aspect, this application provides a terminal device, including:
a transceiver unit, configured to receive first information from a network device, where the first information is used to activate a first cell discontinuous transmission mechanism of a first multicast service configured by the network device and/or a second cell discontinuous transmission mechanism of a first broadcast service configured by the network device.

In some optional implementations of the fourth aspect, the first information is included in a first paging message. The transceiver unit is further configured to receive configuration information from the network device, where the configuration information indicates the first cell discontinuous transmission mechanism and/or the second cell discontinuous transmission mechanism configured by the network device.

In some optional implementations of the fourth aspect, the transceiver unit is further configured to receive a second paging message from the network device, where the second paging message is used to deactivate the first cell discontinuous transmission mechanism and/or the second cell discontinuous transmission mechanism.

In some optional implementations of the third aspect or the fourth aspect, the first information further includes configuration information, and the configuration information indicates the first cell discontinuous transmission mechanism and/or the second cell discontinuous transmission mechanism configured by the network device.

In some optional implementations of the third aspect or the fourth aspect, the first paging message includes a first activation instruction, and the first activation instruction is used to activate a cell discontinuous transmission mechanism corresponding to a first group. The first group includes the terminal device, and the cell discontinuous transmission mechanism corresponding to the first group includes the first cell discontinuous transmission mechanism and/or the second cell discontinuous transmission mechanism.

In some optional implementations of the third aspect or the fourth aspect, the first paging message includes a second activation instruction, and the second activation instruction is used to activate cell discontinuous transmission mechanisms of a plurality of multicast services transmitted by the network device and/or cell discontinuous transmission mechanisms of a plurality of broadcast services transmitted by the network device. The first multicast service is included in the plurality of multicast services, and the first broadcast service is included in the plurality of broadcast services.

In some optional implementations of the third aspect or the fourth aspect, the first paging message includes a third activation instruction and/or a fourth activation instruction. The third activation instruction is used to activate cell discontinuous transmission mechanisms of a plurality of multicast services transmitted by the network device, and the first multicast service is included in the plurality of multicast services. The fourth activation instruction is used to activate cell discontinuous transmission mechanisms of a plurality of broadcast services transmitted by the network device, and the first broadcast service is included in the plurality of broadcast services.

In some optional implementations of the third aspect or the fourth aspect, the second paging message includes a first deactivation instruction, and the first deactivation instruction is used to deactivate the cell discontinuous transmission mechanism corresponding to the first group. The first group includes the terminal device, and the cell discontinuous transmission mechanism corresponding to the first group includes the first cell discontinuous transmission mechanism and/or the second cell discontinuous transmission mechanism.

In some optional implementations of the third aspect or the fourth aspect, the second paging message includes a second deactivation instruction, and the second deactivation instruction is used to deactivate the cell discontinuous transmission mechanisms of the plurality of multicast services transmitted by the network device and/or the cell discontinuous transmission mechanisms of the plurality of broadcast services transmitted by the network device. The first multicast service is included in the plurality of multicast services, and the first broadcast service is included in the plurality of broadcast services.

In some optional implementations of the third aspect or the fourth aspect, the second paging message includes a third deactivation instruction and/or a fourth deactivation instruction. The third deactivation instruction is used to deactivate the cell discontinuous transmission mechanisms of the plurality of multicast services transmitted by the network device, and the first multicast service is included in the plurality of multicast services. The fourth deactivation instruction is used to deactivate the cell discontinuous transmission mechanisms of the plurality of broadcast services transmitted by the network device, and the first broadcast service is included in the plurality of broadcast services.

It may be understood that the network device according to the third aspect is configured to implement the method according to any one of the foregoing first aspect or possible implementations of the first aspect. The terminal device according to the fourth aspect is configured to implement the method according to any one of the foregoing second aspect or possible implementations of the second aspect. Beneficial effects of the terminal device are as described above, and details are not described herein again.

According to a fifth aspect, this application provides a communication apparatus, including a processor and a memory. The processor stores instructions. When the instructions stored in the memory are run on the processor, the method according to any one of the first aspect or possible implementations of the first aspect and the method according to any one of the second aspect or possible implementations of the first aspect are implemented.

According to a sixth aspect, this application provides a computer-readable storage medium. The computer-readable storage medium stores instructions. When the instructions are run on a processor, the method according to any one of the first aspect or possible implementations of the first aspect and the method according to any one of the second aspect or possible implementations of the first aspect are implemented.

According to a seventh aspect, this application provides a computer program product. When the computer program product is executed on a processor, the method according to any one of the first aspect or possible implementations of the first aspect and the method according to any one of the second aspect or possible implementations of the first aspect are implemented.

Beneficial effects of any one of the fifth aspect to the seventh aspect are similar to those of any one of the first aspect or any possible implementations of the first aspect and any one of the second aspect or possible implementation of the first aspect, and details are not described herein again.

### BRIEF DESCRIPTION OF DRAWINGS

FIG. 1 is a diagram of a system architecture according to an embodiment of this application;
FIG. 2 is a schematic flowchart of a communication method according to an embodiment of this application;
FIG. 3 is a diagram of a cell discontinuous transmission mechanism according to an embodiment of this application;
FIG. 4 is a diagram of a structure of a communication apparatus according to an embodiment of this application; and
FIG. 5 is a diagram of another structure of a communication apparatus according to an embodiment of this application.

### DESCRIPTION OF EMBODIMENTS

Embodiments of this application provide a communication method and a related device, to reduce power consumption of a network device.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

First, proper nouns and related concepts that may be used in embodiments of this application are described.

### 1. Multicast (multicast)

Multicast is a point-to-multipoint communication manner, and means that a multicast source (one or more hosts) sends same data to a plurality of hosts at the same time. A basic concept in the multicast is a "group". The foregoing plurality of hosts may be understood as a multicast group (multicast group). The multicast group is a group of receivers that expect to receive a particular data stream, and each node in the multicast group may be referred to as a multicast group member (multicast group member). It should be noted that the multicast group has no physical or geographical boundary, and a host in the group may be located anywhere in an internet or a dedicated network.

### 2. Broadcast (broadcast)

In a broadcast transmission mechanism, all network hosts are allowed to use a same communication channel. In a broadcast mode, one host transmits data packets to all other hosts. This manner is referred to as "all-to-all". Different from multicast transmission, in a multicast mode, group management does not need to be performed.

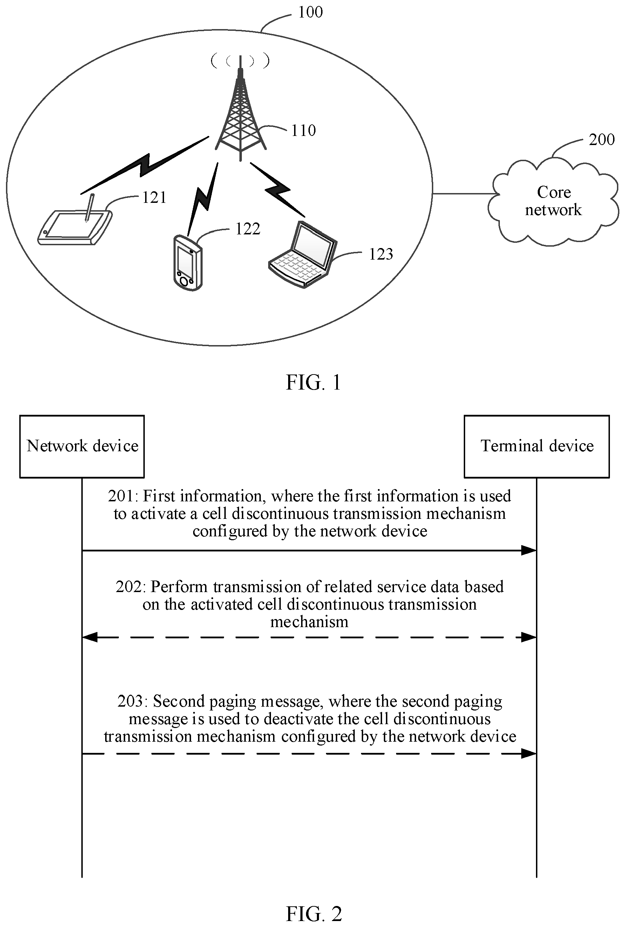

FIG. 1 is a diagram of a system architecture according to an embodiment of this application. It may be understood that FIG. 1 is a diagram of a possible and non-limiting system.

As shown in FIG. 1, the communication system includes a radio access network (radio access network, RAN) 100 and a core network (core network, CN) 200. The RAN 100 includes a RAN node 110, a terminal device 121, a terminal device 122, and a terminal device 123.

For example, the terminal device 121 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network. This is not specifically limited herein.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, WiFi) system. The RAN 100 may alternatively be a communication system that integrates the foregoing two or more systems.

The RAN node 110, that is, a network device, sometimes also referred to as an access network device, a RAN entity, an access node, or the like, constitutes a part of the communication system, to help a terminal implement radio access.

In some possible implementations, the RAN node 110 may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node 110 may be a macro base station, a micro base station or an indoor base station, a relay node or a donor node, or a radio controller in a CRAN scenario. It should be noted that the RAN node 110 in this application may alternatively be a logical node, a logical module, or software that can implement all or some functions of the RAN node 110. This is not specifically limited herein.

The terminal device 121 may also be referred to as a terminal, user equipment (user equipment, UE), a mobile station, a mobile terminal, or the like. The terminal in embodiments of this application may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application. For example, FIG. 1 shows three different types of terminal devices: the terminal device 121, the terminal device 122, and the terminal device 123. In addition, all or some of the functions of the terminal device in this application may alternatively be implemented by using software functions running on hardware. The terminal device in this application may alternatively be a logical node, a logical module, or software that can implement all or some of the functions of the terminal device. This is not specifically limited herein.

It should be noted that FIG. 1 is only an example of the communication system. In actual application, the RAN 100 may alternatively include more RAN nodes, and more or fewer terminal devices. Types of a plurality of RAN nodes may be the same, some of the plurality of RAN nodes may be the same, or all of the plurality of RAN nodes may be different. This is not specifically limited herein. The RAN 100 may alternatively include another RAN node, for example, a wireless relay device and/or a wireless backhaul device (not shown in FIG. 1).

In this application, "sending information to... (for example, a terminal device)" may be understood as that a destination end of the information is the terminal device, and may include directly or indirectly sending information to the terminal device. "Receiving information from... (for example, a terminal device)" may be understood as that a source end of the information is the terminal device, and may include directly or indirectly receiving information from the terminal device. Necessary processing, for example, a format change, may be performed on the information between the source end and the destination end for information sending. However, the destination end can understand valid information from the source end. Similar descriptions in this application may be understood similarly, and details are not described herein again.

FIG. 2 is a schematic flowchart of a communication method according to an embodiment of this application, including:
201: A network device sends first information to a terminal device, where the first information is used to activate a cell discontinuous transmission mechanism configured by the network device.

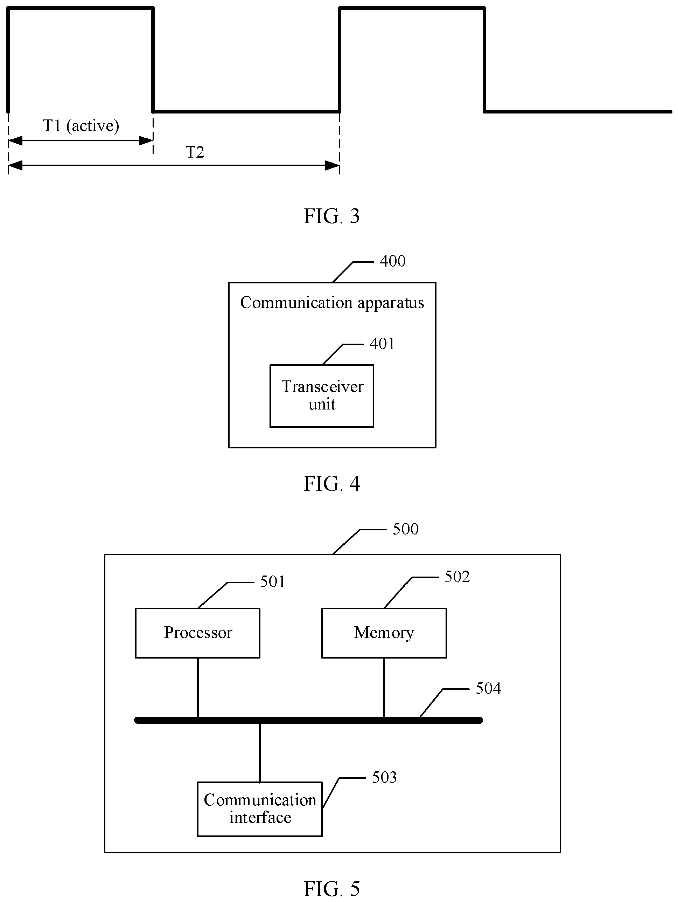

First, the cell discontinuous transmission mechanism is described with reference to FIG. 3. FIG. 3 is a diagram of a cell discontinuous transmission mechanism according to an embodiment of this application.

In the embodiment shown in FIG. 3, two cell discontinuous transmission periods are shown, T2 represents one of the periods, and the period includes two intervals: T1 and an interval other than T1. T1 represents an active period, and the part other than T1 represents an inactive period. The active period is also referred to as on duration time (on duration time). In the active period, the network device sends related service data to the terminal device, and the terminal device expects to receive the related service data from the network device.

It should be noted that the cell discontinuous transmission mechanism configured by the network device described in this embodiment of this application includes a cell discontinuous transmission mechanism of a multicast service and/or a cell discontinuous transmission mechanism of a broadcast service. In this case, the related service data described above includes multicast service data and/or broadcast service data. In the following descriptions, a first cell discontinuous transmission mechanism of a first multicast service and a second cell discontinuous transmission mechanism of a first broadcast service are used as examples.

That the network device sends the first information to the terminal device means that the terminal device receives the first information from the network device. The first information is used to activate the first cell discontinuous transmission mechanism of the first multicast service configured by the network device and/or the second cell discontinuous transmission mechanism of the first broadcast service configured by the network device.

Specifically, there are a plurality of possibilities of the first information. The first information may be used to activate the first cell discontinuous transmission mechanism, may be used to activate the second cell discontinuous transmission mechanism, or may be used to activate the first cell discontinuous transmission mechanism and the second cell discontinuous transmission mechanism. This is not specifically limited herein.

In this embodiment of this application, there are a plurality of possibilities of the first information, which are separately described below:
In some optional implementations, the first information further includes configuration information, and the configuration information indicates the first cell discontinuous transmission mechanism and/or the second cell discontinuous transmission mechanism configured by the network device. To be specific, the network device sends the configuration information to the terminal device, when the terminal device receives the configuration information, it is considered that the configuration takes effect immediately, and the terminal device performs related service data transmission with the network device based on a cell discontinuous transmission mechanism indicated by the configuration information.

For example, assuming that the configuration information indicates the first cell discontinuous transmission mechanism of the first multicast service configured by the network device, that the terminal device receives the configuration information means that the first cell discontinuous transmission mechanism takes effect.

For example, assuming that the configuration information indicates the first cell discontinuous transmission mechanism of the first multicast service and the second cell discontinuous transmission mechanism that are configured by the network device, that the terminal device receives the configuration information means that the first cell discontinuous transmission mechanism and the second cell discontinuous transmission mechanism take effect.

In this application, the cell discontinuous transmission mechanism of the multicast service and/or the cell discontinuous transmission mechanism of the broadcast service are/is included in the configuration information, so that after sending the configuration information, the network device can send related data of the multicast service and/or the broadcast service based on the configured cell discontinuous transmission mechanism, and after receiving the configuration information, the terminal device can receive the related data of the multicast service and/or the broadcast service based on the configured cell discontinuous transmission mechanism, without waiting, thereby reducing a transmission delay and improving efficiency.

In some optional implementations, the first information may alternatively be decoupled from the configuration information. To be specific, the network device first sends the configuration information to the terminal device, where the configuration information indicates the first cell discontinuous transmission mechanism and/or the second cell discontinuous transmission mechanism configured by the network device. A first paging message is then sent to the terminal device, where the first paging message includes the first information. In other words, the configuration information is activated in the first paging message.

It should be noted that a cell discontinuous transmission mechanism indicated to be activated in the first paging message may be the same as or different from a cell discontinuous transmission mechanism sent by the network device to the terminal device. This is not specifically limited herein.

For example, assuming that the configuration information sent by the network device to the terminal device indicates the first cell discontinuous transmission mechanism and the second cell discontinuous transmission mechanism that are configured by the network device, the first paging message may be used to activate the first cell discontinuous transmission mechanism and the second cell discontinuous transmission mechanism, or may be used only to activate the first cell discontinuous transmission mechanism.

In this application, there are a plurality of possible manners of activating the cell discontinuous transmission mechanism of the multicast service and/or the cell discontinuous transmission mechanism of the broadcast service. This enriches implementations and application scenarios of the technical solutions of this application and improves flexibility of the technical solutions. In addition, in a solution in which the network device separately sends the configuration information and activation information to the terminal device, effective time of the cell discontinuous transmission mechanism of the multicast service and/or the cell discontinuous transmission mechanism of the broadcast service can be flexibly controlled, thereby further improving practicability of the technical solutions.

In this embodiment of this application, there are a plurality of possibilities of an activation granularity corresponding to the first paging message. The possible cases are separately described below:
In some optional implementations, the first paging message may be used to separately activate a cell discontinuous transmission mechanism of a multicast service corresponding to a group and/or a cell discontinuous transmission mechanism a broadcast service corresponding to a group. In summary, the first paging message includes a first activation instruction, and the first activation instruction is used to activate a cell discontinuous transmission mechanism corresponding to a first group. The first group includes the terminal device, and the cell discontinuous transmission mechanism corresponding to the first group includes the first cell discontinuous transmission mechanism and/or the second cell discontinuous transmission mechanism. In other words, the first activation instruction is used to activate the first cell discontinuous transmission mechanism of the first multicast service and/or the second cell discontinuous transmission mechanism of the first broadcast service in the first group in which the terminal device is located.

It may be understood that the first group may be indicated by a group identifier. The group identifier includes an identifier that can uniquely indicate one group, for example, a radio network temporary identity (group common radio network temporary identity, G-RNTI) and a temporary mobile group identifier (temporary mobile group identifier, TMGI). An identifier of the terminal device is included in the identifier of the first group, or the group identifier used by the terminal device is the identifier of the first group.

In this application, the cell discontinuous transmission mechanism corresponding to the first group may be separately activated in the first paging message. This not only can avoid affecting a service other than the first multicast service and/or the first broadcast service in the first group, but also can avoid interference to a service in another group, thereby improving reliability of the technical solutions in this application.

In some optional implementations, the first paging message may be further used to simultaneously activate cell discontinuous transmission mechanisms of a plurality of multicast services and/or cell discontinuous transmission mechanisms of a plurality of broadcast services. In summary, the first paging message may include a second activation instruction, and the second activation instruction is used to activate cell discontinuous transmission mechanisms of a plurality of multicast services transmitted by the network device and/or cell discontinuous transmission mechanisms of a plurality of broadcast services transmitted by the network device. The first multicast service is included in the plurality of multicast services, and the first broadcast service is included in the plurality of broadcast services. In other words, the first cell discontinuous transmission mechanism indicated by the first information is included in the cell discontinuous transmission mechanisms of the plurality of multicast services, and the second cell discontinuous transmission mechanism indicated by the first information is included in the cell discontinuous transmission mechanisms of the plurality of broadcast services.

It should be noted that the foregoing second activation instruction being used to activate the cell discontinuous transmission mechanisms of the plurality of multicast services transmitted by the network device and/or the cell discontinuous transmission mechanisms of the plurality of broadcast services transmitted by the network device means that the second activation instruction can not only be used to activate a related configuration of the multicast service but also be used to activate a related configuration of the broadcast service. It is not limited that the network device is necessarily configured with both the multicast service and the broadcast service. Instead, when receiving the second activation instruction, the terminal device activates a cell discontinuous transmission mechanism that is indicated by the activation instruction and that has already been synchronized with the network device. The synchronization herein means that the network device delivers, to the terminal device, related information of a cell discontinuous transmission mechanism configured by the network device, and the terminal device receives the related information.

For example, assuming that the network device and the terminal device synchronize only the first cell discontinuous transmission mechanism of the first multicast service, when receiving the second activation instruction, the terminal device activates the first cell discontinuous transmission mechanism. Assuming that the network device and the terminal device synchronize the first cell discontinuous transmission mechanism of the first multicast service and the second cell discontinuous transmission mechanism of the first broadcast service, when receiving the second activation instruction, the terminal device activates the first cell discontinuous transmission mechanism and the second cell discontinuous transmission mechanism.

Optionally, a function of the second activation instruction may be implemented by using a bit (bit) of the first paging message.

For example, a value of a first bit of the first paging message is defined to be 1, indicating that the first cell discontinuous transmission mechanism and/or the second cell discontinuous transmission mechanism are/is activated, to implement the function of the second activation instruction. In this solution, in a case that the network device and the terminal device synchronize the first discontinuous transmission mechanism and the second cell discontinuous transmission mechanism, when receiving the first paging message with the first bit set to 1, the terminal device activates the first discontinuous transmission mechanism and the second cell discontinuous transmission mechanism. In a case that the network device and the terminal device synchronize the second cell discontinuous transmission mechanism, when receiving the first paging message with the first bit set to 1, the terminal device activates the second cell discontinuous transmission mechanism.

According to the foregoing examples, it may be understood that both activation of the first discontinuous transmission mechanism and activation of the second cell discontinuous transmission mechanism can be implemented by using the first bit. In addition, the foregoing examples do not constitute a limitation to an implementation of the second activation instruction. The first bit and a definition of the value may be determined according to actual application. This is not limited in this application.

In this application, the first paging message may be used to simultaneously activate the cell discontinuous transmission mechanisms of the plurality of multicast services and/or the cell discontinuous transmission mechanisms of the plurality of broadcast services, without activating each multicast service or each broadcast service separately. This not only can improve efficiency, but also can reduce a data transmission amount between the network device and the terminal device, thereby reducing occupation of network resources.

In some optional implementations, the first paging message may be used to separately activate the first cell discontinuous transmission mechanism and the second cell discontinuous transmission mechanism. In summary, the first paging message includes a third activation instruction and/or a fourth activation instruction.

The third activation instruction is used to activate cell discontinuous transmission mechanisms of a plurality of multicast services transmitted by the network device, and the first multicast service is included in the plurality of multicast services. In other words, the first cell discontinuous transmission mechanism indicated by the first information is included in the cell discontinuous transmission mechanisms of the plurality of multicast services.

The fourth activation instruction is used to activate cell discontinuous transmission mechanisms of a plurality of broadcast services transmitted by the network device, and the first broadcast service is included in the plurality of broadcast services. In other words, the second cell discontinuous transmission mechanism indicated by the first information is included in the cell discontinuous transmission mechanisms of the plurality of broadcast services.

That is, in this implementation, the first paging message may separately control activation of the first cell discontinuous transmission mechanism and activation of the second cell discontinuous transmission mechanism by using different activation instructions, and the activation of the first cell discontinuous transmission mechanism and the activation of the second cell discontinuous transmission mechanism are decoupled.

Optionally, functions of the third activation instruction and the fourth activation instruction may be respectively implemented by using two bits of the first paging message.

For example, a value of a second bit of the first paging message is defined to be 1, indicating that the first cell discontinuous transmission mechanism is activated, to implement the function of the third activation instruction. A value of a third bit of the first paging message is 1, indicating that the second cell discontinuous transmission mechanism is activated, to implement the function of the fourth activation instruction.

Optionally, in this solution, in a case that the network device and the terminal device synchronize the first discontinuous transmission mechanism and the second cell discontinuous transmission mechanism, when receiving the first paging message with both the second bit and the third bit set to 1, the terminal device activates the first discontinuous transmission mechanism and the second cell discontinuous transmission mechanism.

Optionally, in this solution, in a case that the network device and the terminal device synchronize the first discontinuous transmission mechanism and the second cell discontinuous transmission mechanism, when receiving the first paging message with the second bit set to 1 and the third bit set to 0, the terminal device activates only the first cell discontinuous transmission mechanism.

Optionally, in this solution, in a case that the network device and the terminal device synchronize the first discontinuous transmission mechanism, when receiving the first paging message with both the second bit and the third bit set to 1, the terminal device activates only the first cell discontinuous transmission mechanism. In addition, the terminal device may further send feedback information to the network device, where the feedback information indicates that the terminal device has not synchronized the second cell discontinuous transmission mechanism corresponding to the fourth activation instruction.

It should be noted that the foregoing examples do not constitute a limitation to implementations of the third activation instruction and the fourth activation instruction. The second bit, the third bit, and corresponding definitions of the values may be determined according to actual application. This is not limited in this application.

In addition, it should be noted that the plurality of multicast services described in this embodiment of this application may be some or all multicast services configured by the network device, and the plurality of broadcast services may be some or all broadcast services configured by the network device. For example, in a solution in which the plurality of multicast services are some of the multicast services configured by the network device, the first paging message may further include identifiers of the plurality of multicast services, to distinguish the multicast services from other services. In a solution in which the plurality of multicast services are all the multicast services configured by the network device, the first paging message may not include identifiers of the multicast services. The plurality of broadcast services are similar, and details are not described herein again.

In this application, the instruction for activating the cell discontinuous transmission mechanism of the multicast service may be decoupled from the instruction for activating the cell discontinuous transmission mechanism of the broadcast service. In actual application, in a same paging message, different services may be activated or not without interference, to improve reliability of the technical solutions, and further enrich implementations of the technical solutions of this application.

In conclusion, it can be learned based on the foregoing descriptions that this application has the following beneficial effects: After the network device configures a cell discontinuous transmission mechanism of the multicast service and/or a cell discontinuous transmission mechanism of the broadcast service, information used to activate the cell discontinuous transmission mechanism is sent to the network device, so that the cell discontinuous transmission mechanism takes effect. Therefore, during transmission of a related service between the network device and the terminal device, related service data does not need to be continuously sent, but sent in a specific time period according to a definition of a cell discontinuous transmission mechanism, to reduce power consumption of the network device. Therefore, during transmission of a related service between the terminal device and the network device, a related data receiving function does not need to be continuously enabled, but is enabled in a specific time period according to the definition of the cell discontinuous transmission mechanism, to reduce power consumption of the terminal device.

In some optional implementations, after step 201, the network device and the terminal device may further perform step 202: Perform transmission of related service data based on the activated cell discontinuous transmission mechanism.

In this embodiment of this application, the first cell discontinuous transmission mechanism defines, in a transmission solution for the first multicast service, an active period and an inactive period in which the network device sends data to the terminal device. Only when in the active period of data sending, the network device sends data of the first multicast service to the terminal device. In other words, the terminal device receives the data of the first multicast service from the network device only in this period.

Similarly, the second cell discontinuous transmission mechanism defines, in a transmission solution for the first broadcast service, an active period and an inactive period in which the network device sends data to the terminal device. Only when in the active period of data sending, the network device sends data of the first broadcast service to the terminal device. In other words, the terminal device receives the data of the first broadcast service from the network device only in this period.

In some optional implementations, after step 201, the network device may further perform step 203: Send a second paging message to the terminal device, where the second paging message is used to deactivate the cell discontinuous transmission mechanism configured by the network device.

The foregoing deactivation means that the network device and the terminal device no longer perform data transmission of a related service based on a cell discontinuous transmission mechanism corresponding to the second sequential message. For example, assuming that the second paging message indicates to deactivate the first cell discontinuous transmission mechanism of the first multicast service, the network device no longer sends data of the first multicast service to the terminal device based on the first cell discontinuous transmission mechanism, and the terminal device no longer receives the data of the first multicast service from the network device based on the first cell discontinuous transmission mechanism.

This application further provides a solution for deactivating the cell discontinuous transmission mechanism of the multicast service and/or the cell discontinuous transmission mechanism of the broadcast service, to flexibly adapt to different requirements, thereby further improving practicability of the technical solutions.

In this embodiment of this application, there are a plurality of possibilities of a deactivation granularity of the second paging message. The possible cases are separately described below:
In some optional implementations, the second paging message may be used to separately deactivate a cell discontinuous transmission mechanism of a multicast service corresponding to a group and/or a cell discontinuous transmission mechanism of a broadcast service corresponding to a group. In summary, the second paging message includes a first deactivation instruction, and the first deactivation instruction is used to deactivate the cell discontinuous transmission mechanism corresponding to the first group. The first group includes the terminal device, and the cell discontinuous transmission mechanism corresponding to the first group includes the first cell discontinuous transmission mechanism and/or the second cell discontinuous transmission mechanism. In other words, the first deactivation instruction is used to deactivate the first cell discontinuous transmission mechanism of the first multicast service and/or the second cell discontinuous transmission mechanism of the first broadcast service in the first group in which the terminal device is located.

In this application, the cell discontinuous transmission mechanism corresponding to the first group may be separately deactivated in the second paging message, to avoid interference to a service of another group, thereby improving reliability of the technical solutions in this application.

In some optional implementations, the second paging message may be further used to simultaneously deactivate the cell discontinuous transmission mechanisms of the plurality of multicast services and/or the cell discontinuous transmission mechanisms of the plurality of broadcast services. In summary, the second paging message may include a second deactivation instruction, and the second deactivation instruction is used to deactivate the cell discontinuous transmission mechanisms of the plurality of multicast services transmitted by the network device and/or the cell discontinuous transmission mechanisms of the plurality of broadcast services transmitted by the network device. The first multicast service is included in the plurality of multicast services, and the first broadcast service is included in the plurality of broadcast services. In other words, the first cell discontinuous transmission mechanism indicated by the first information is included in the cell discontinuous transmission mechanisms of the plurality of multicast services, and the second cell discontinuous transmission mechanism indicated by the first information is included in the cell discontinuous transmission mechanisms of the plurality of broadcast services.

It should be noted that the foregoing second deactivation instruction being used to deactivate the cell discontinuous transmission mechanisms of the plurality of multicast services transmitted by the network device and/or the cell discontinuous transmission mechanisms of the plurality of broadcast services transmitted by the network device means that the second deactivation instruction can not only be used to deactivate a related configuration of the multicast service but also be used to deactivate a related configuration of the broadcast service. It is not limited that the network device is necessarily configured with both the multicast service and the broadcast service. Instead, when receiving the second deactivation instruction, the terminal device deactivates a cell discontinuous transmission mechanism that is indicated by the deactivation instruction and that has already been synchronized with the network device.

For example, assuming that the network device and the terminal device synchronize only the first cell discontinuous transmission mechanism of the first multicast service, when receiving the second deactivation instruction, the terminal device deactivates the first cell discontinuous transmission mechanism. Assuming that the network device and the terminal device synchronize the first cell discontinuous transmission mechanism of the first multicast service and the second cell discontinuous transmission mechanism of the first broadcast service, when receiving the second deactivation instruction, the terminal device deactivates the first cell discontinuous transmission mechanism and the second cell discontinuous transmission mechanism.

Optionally, a function of the second deactivation instruction may be implemented by using a bit of the second paging message.

For example, a value of a fourth bit of the second paging message is defined to be 0, indicating that the first cell discontinuous transmission mechanism and/or the second cell discontinuous transmission mechanism are/is deactivated, to implement the function of the second deactivation instruction. In this solution, in a case that the network device and the terminal device synchronize the first discontinuous transmission mechanism and the second cell discontinuous transmission mechanism, when receiving the second paging message with the fourth bit set to 1, the terminal device deactivates the first discontinuous transmission mechanism and the second cell discontinuous transmission mechanism. In a case that the network device and the terminal device synchronize the second cell discontinuous transmission mechanism, when receiving the second paging message with the fourth bit set to 1, the terminal device deactivates the second cell discontinuous transmission mechanism.

According to the foregoing examples, it may be understood that both deactivation of the first discontinuous transmission mechanism and deactivation of the second cell discontinuous transmission mechanism can be implemented by using the fourth bit. In addition, the foregoing examples do not constitute a limitation to an implementation of the second deactivation instruction. The fourth bit and a definition of the value may be determined according to actual application. This is not limited in this application.

In this application, the second paging message may be used to simultaneously deactivate the cell discontinuous transmission mechanisms of the plurality of multicast services and/or the cell discontinuous transmission mechanisms of the plurality of broadcast services, without deactivating each multicast service or each broadcast service separately. This not only can improve efficiency, but also can reduce a data transmission amount between the network device and the terminal device, thereby reducing occupation of network resources.

In some optional implementations, the second paging message may be used to separately deactivate the first cell discontinuous transmission mechanism and the second cell discontinuous transmission mechanism. In summary, the second paging message includes a third deactivation instruction and/or a fourth deactivation instruction.

The third deactivation instruction is used to deactivate the cell discontinuous transmission mechanisms of the plurality of multicast services transmitted by the network device, and the first multicast service is included in the plurality of multicast services. In other words, the first cell discontinuous transmission mechanism indicated by the first information is included in the cell discontinuous transmission mechanisms of the plurality of multicast services.

The fourth deactivation instruction is used to deactivate the cell discontinuous transmission mechanisms of the plurality of broadcast services transmitted by the network device, and the first broadcast service is included in the plurality of broadcast services. In other words, the second cell discontinuous transmission mechanism indicated by the first information is included in the cell discontinuous transmission mechanisms of the plurality of broadcast services.

That is, in this implementation, the second paging message may separately control deactivation of the first cell discontinuous transmission mechanism and deactivation of the second cell discontinuous transmission mechanism by using different deactivation instructions, and the deactivation of the first cell discontinuous transmission mechanism and the deactivation of the second cell discontinuous transmission mechanism are decoupled.

Optionally, functions of the third deactivation instruction and the fourth deactivation instruction may be respectively implemented by using two bits of the second paging message.

For example, a value of a fifth bit of the second paging message is defined to be 0, indicating that the first cell discontinuous transmission mechanism is deactivated, to implement the function of the third deactivation instruction. A value of a sixth bit of the second paging message is 0, indicating that the second cell discontinuous transmission mechanism is deactivated, to implement the function of the fourth deactivation instruction.

Optionally, in this solution, in a case that the network device and the terminal device synchronize the first discontinuous transmission mechanism and the second cell discontinuous transmission mechanism, when receiving the second paging message with both the fifth bit and the sixth bit set to 0, the terminal device deactivates the first discontinuous transmission mechanism and the second cell discontinuous transmission mechanism.

Optionally, in this solution, in a case that the network device and the terminal device synchronize the first discontinuous transmission mechanism and the second cell discontinuous transmission mechanism, when receiving the second paging message with the fifth bit set to 0 and the sixth bit set to 1, the terminal device deactivates only the first cell discontinuous transmission mechanism.

Optionally, in this solution, in a case that the network device and the terminal device synchronize the first discontinuous transmission mechanism, when receiving the second paging message with both the fifth bit and the sixth bit set to 0, the terminal device deactivates only the first cell discontinuous transmission mechanism.

It should be noted that the foregoing examples do not constitute a limitation to implementations of the third deactivation instruction and the fourth deactivation instruction. The fifth bit, the sixth bit, and corresponding definitions of the values may be determined according to actual application. This is not limited in this application.

In this application, the instruction for deactivating the cell discontinuous transmission mechanism of the multicast service may be decoupled from the instruction for deactivating the cell discontinuous transmission mechanism of the broadcast service. In actual application, in a same paging message, different services may be activated or not without interference, to improve reliability of the technical solutions, and further enrich implementations of the technical solutions of this application.

It should be noted that, for a same multicast service or a same broadcast service, an activation granularity and a deactivation granularity of a paging message may be the same or may be different. This is not specifically limited herein. For example, for the same multicast service, the first paging message used to activate the cell discontinuous transmission mechanism may correspond to one group, and the second paging message used to deactivate the cell discontinuous transmission mechanism corresponds to multicast services of all groups.

The following describes a related device provided in embodiments of this application.

FIG. 4 is a diagram of a structure of a communication apparatus according to an embodiment of this application. As shown in FIG. 4, the communication apparatus 400 includes a transceiver unit 401. Optionally, in this embodiment of this application, the communication apparatus 400 may be used as a network device, and implement the following operations:
In some optional implementations, the communication apparatus 400 includes the transceiver unit 401, configured to send first information to a terminal device, where the first information is used to activate a first cell discontinuous transmission mechanism of a first multicast service configured by the network device and/or a second cell discontinuous transmission mechanism of a first broadcast service configured by the network device.

In some optional implementations, the first information further includes configuration information, and the configuration information indicates the first cell discontinuous transmission mechanism and/or the second cell discontinuous transmission mechanism configured by the network device.

In some optional implementations, the first information is included in a first paging message. The transceiver unit 401 is further configured to send the configuration information to the terminal device, where the configuration information indicates the first cell discontinuous transmission mechanism and/or the second cell discontinuous transmission mechanism configured by the network device.

In some optional implementations, the first paging message includes a first activation instruction, and the first activation instruction is used to activate a cell discontinuous transmission mechanism corresponding to a first group. The first group includes the terminal device, and the cell discontinuous transmission mechanism corresponding to the first group includes the first cell discontinuous transmission mechanism and/or the second cell discontinuous transmission mechanism.

In some optional implementations, the first paging message includes a second activation instruction, and the second activation instruction is used to activate cell discontinuous transmission mechanisms of a plurality of multicast services transmitted by the network device and/or cell discontinuous transmission mechanisms of a plurality of broadcast services transmitted by the network device. The first multicast service is included in the plurality of multicast services, and the first broadcast service is included in the plurality of broadcast services.

In some optional implementations, the first paging message includes a third activation instruction and/or a fourth activation instruction. The third activation instruction is used to activate cell discontinuous transmission mechanisms of a plurality of multicast services transmitted by the network device, and the first multicast service is included in the plurality of multicast services. The fourth activation instruction is used to activate cell discontinuous transmission mechanisms of a plurality of broadcast services transmitted by the network device, and the first broadcast service is included in the plurality of broadcast services.

In some optional implementations, the transceiver unit 401 is further configured to: transmit the first multicast service to the terminal device based on the first cell discontinuous transmission mechanism; and/or transmit the first broadcast service to the terminal device based on the second cell discontinuous transmission mechanism.

In some optional implementations, the transceiver unit 401 is further configured to send a second paging message to the terminal device, where the second paging message is used to deactivate the first cell discontinuous transmission mechanism and/or the second cell discontinuous transmission mechanism.

In some optional implementations, the second paging message includes a first deactivation instruction, and the first deactivation instruction is used to deactivate the cell discontinuous transmission mechanism corresponding to the first group. The first group includes the terminal device, and the cell discontinuous transmission mechanism corresponding to the first group includes the first cell discontinuous transmission mechanism and/or the second cell discontinuous transmission mechanism.

In some optional implementations, the second paging message includes a second deactivation instruction, and the second deactivation instruction is used to deactivate the cell discontinuous transmission mechanisms of the plurality of multicast services transmitted by the network device and/or the cell discontinuous transmission mechanisms of the plurality of broadcast services transmitted by the network device. The first multicast service is included in the plurality of multicast services, and the first broadcast service is included in the plurality of broadcast services.

In some optional implementations, the second paging message includes a third deactivation instruction and/or a fourth deactivation instruction. The third deactivation instruction is used to deactivate the cell discontinuous transmission mechanisms of the plurality of multicast services transmitted by the network device, and the first multicast service is included in the plurality of multicast services. The fourth deactivation instruction is used to deactivate the cell discontinuous transmission mechanisms of the plurality of broadcast services transmitted by the network device, and the first broadcast service is included in the plurality of broadcast services.

The communication apparatus 400 is configured to implement operations performed by the network device in embodiments shown in FIG. 1 to FIG. 3. For details, refer to the foregoing descriptions, and details are not described herein again.

Optionally, in this embodiment of this application, the communication apparatus 400 may be used as a terminal device, and implement the following operations:

In some optional implementations, the transceiver unit 401 is configured to receive first information from a network device, where the first information is used to activate a first cell discontinuous transmission mechanism of a first multicast service configured by the network device and/or a second cell discontinuous transmission mechanism of a first broadcast service configured by the network device.

In some optional implementations, the first information further includes configuration information, and the configuration information indicates the first cell discontinuous transmission mechanism and/or the second cell discontinuous transmission mechanism configured by the network device.

In some optional implementations, the first information is included in a first paging message. The transceiver unit 401 is further configured to receive the configuration information from the network device, where the configuration information indicates the first cell discontinuous transmission mechanism and/or the second cell discontinuous transmission mechanism configured by the network device.

In some optional implementations, the first paging message includes a first activation instruction, and the first activation instruction is used to activate a cell discontinuous transmission mechanism corresponding to a first group. The first group includes the terminal device, and the cell discontinuous transmission mechanism corresponding to the first group includes the first cell discontinuous transmission mechanism and/or the second cell discontinuous transmission mechanism.

In some optional implementations, the first paging message includes a second activation instruction, and the second activation instruction is used to activate cell discontinuous transmission mechanisms of a plurality of multicast services transmitted by the network device and/or cell discontinuous transmission mechanisms of a plurality of broadcast services transmitted by the network device. The first multicast service is included in the plurality of multicast services, and the first broadcast service is included in the plurality of broadcast services.

In some optional implementations, the first paging message includes a third activation instruction and/or a fourth activation instruction. The third activation instruction is used to activate cell discontinuous transmission mechanisms of a plurality of multicast services transmitted by the network device, and the first multicast service is included in the plurality of multicast services. The fourth activation instruction is used to activate cell discontinuous transmission mechanisms of a plurality of broadcast services transmitted by the network device, and the first broadcast service is included in the plurality of broadcast services.

In some optional implementations, the transceiver unit 401 is further configured to: transmit the first multicast service to the network device based on the first cell discontinuous transmission mechanism; and/or transmit the first broadcast service to the network device based on the second cell discontinuous transmission mechanism.

In some optional implementations, the transceiver unit 401 is further configured to receive a second paging message from the network device, where the second paging message is used to deactivate the first cell discontinuous transmission mechanism and/or the second cell discontinuous transmission mechanism.

In some optional implementations, the second paging message includes a first deactivation instruction, and the first deactivation instruction is used to deactivate the cell discontinuous transmission mechanism corresponding to the first group. The first group includes the terminal device, and the cell discontinuous transmission mechanism corresponding to the first group includes the first cell discontinuous transmission mechanism and/or the second cell discontinuous transmission mechanism.

In some optional implementations, the second paging message includes a second deactivation instruction, and the second deactivation instruction is used to deactivate the cell discontinuous transmission mechanisms of the plurality of multicast services transmitted by the network device and/or the cell discontinuous transmission mechanisms of the plurality of broadcast services transmitted by the network device. The first multicast service is included in the plurality of multicast services, and the first broadcast service is included in the plurality of broadcast services.

In some optional implementations, the second paging message includes a third deactivation instruction and/or a fourth deactivation instruction. The third deactivation instruction is used to deactivate the cell discontinuous transmission mechanisms of the plurality of multicast services transmitted by the network device, and the first multicast service is included in the plurality of multicast services. The fourth deactivation instruction is used to deactivate the cell discontinuous transmission mechanisms of the plurality of broadcast services transmitted by the network device, and the first broadcast service is included in the plurality of broadcast services.

The communication apparatus 400 is configured to implement operations performed by the terminal device in embodiments shown in FIG. 1 to FIG. 3. For details, refer to the foregoing descriptions, and details are not described herein again.

FIG. 5 is a diagram of a structure of a communication apparatus according to an embodiment of this application. The communication apparatus 500 may be configured to implement functions of the terminal device or the network device in the foregoing methods corresponding to FIG. 1 to FIG. 3.

The communication apparatus 500 shown in FIG. 5 may include a processor 501, a memory 502, a communication interface 503, and a bus 504. The processor 501, the memory 502, and the communication interface 503 may be connected via the bus 504.

The processor 501 is a control center for generating the communication apparatus 500, and may be a general-purpose central processing unit (central processing unit, CPU), another general-purpose processor, or the like. The general-purpose processor may be a microprocessor, any conventional processor, or the like.

For example, the processor 501 may include one or more CPUs.

The memory 502 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a magnetic disk storage medium or another magnetic storage device, or any other medium that can be used to carry or store expected program code in a form of instructions or a data structure and that can be accessed by a computer, but is not limited thereto.

In a possible implementation, the memory 502 may be independent of the processor 501. The memory 502 may be connected to the processor 501 via the bus 504, and is configured to store data, instructions, or program code. When invoking and executing the instructions or the program code stored in the memory 502, the processor 501 can implement the method provided in embodiments of this application.

In another possible implementation, the memory 502 may alternatively be integrated with the processor 501.

The communication interface 503 is configured to connect the communication apparatus 500 to another device via a communication network. The communication network may be an ethernet, a radio access network (radio access network, RAN), a wireless local area network (wireless local area network, WLAN), or the like.

The bus 504 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one bold line is used in FIG. 5 for representation, but this does not mean that there is only one bus or only one type of bus.

It should be noted that the structure shown in FIG. 5 does not constitute a limitation on the communication apparatus 500. In addition to the components shown in FIG. 5, the communication apparatus 500 may include more or fewer components than those shown in the figure, or some components may be combined, or different component deployment may be used.

An embodiment of this application further provides a computer-readable storage medium. The computer-readable storage medium may be any usable medium that can be stored by a compute device, or a data storage device, for example, a data center, including one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid-state drive), or the like. The computer-readable storage medium includes instructions. The instructions instruct the compute device to perform the foregoing communication method.

An embodiment of this application further provides a computer program product including instructions. The computer program product may be software or a program product that includes the instructions and that can run on a compute device or can be stored in any usable medium. When the computer program product runs on at least one computer device, the at least one computer device is caused to perform the foregoing communication method.

All or a part of the foregoing embodiments may be implemented by using software, hardware, firmware, or any combination thereof. When software is used to implement embodiments, all or a part of embodiments may be implemented in a form of a computer program product.

It may be clearly understood by a person skilled in the art that, for the purpose of convenient and brief description, for a detailed working process of the foregoing system, device, and unit, refer to a corresponding process in the foregoing method embodiments, and details are not described herein again.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. The term "and/or" in this application describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects. In addition, the terms "include", "have", and any other variant thereof are intended to cover a non-exclusive inclusion. For example, a process, method, system, product, or device that includes a series of steps or modules is not necessarily limited to those steps or modules that are expressly listed, but may include other steps or modules that are not expressly listed or that are inherent to the process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the modules in this application is logical division. In actual application, there may be another division manner. For example, a plurality of modules may be combined or integrated into another system, or some features may be ignored or may not be performed. In addition, the displayed or discussed mutual coupling or direct coupling or communication connection may be through some ports, and the indirect coupling or communication connection between modules may be in an electrical form or another similar form. This is not limited in this application. In addition, modules or sub-modules described as separate components may be or may not be physically separated, or may be or may not be physical modules, or may not be grouped into a plurality of circuit modules. Objectives of the solutions of this application may be achieved by selecting some or all of the modules according to actual requirements.

Finally, it should be noted that the foregoing embodiments are intended merely for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions of embodiments of this application.

## Claims

1. A communication method, wherein the method is applied to a network device, and the method comprises:
sending first information to a terminal device, wherein the first information is used to activate a first cell discontinuous transmission mechanism of a first multicast service configured by the network device and/or a second cell discontinuous transmission mechanism of a first broadcast service configured by the network device.

2. The method according to claim 1, wherein the first information further comprises configuration information, and the configuration information indicates the first cell discontinuous transmission mechanism and/or the second cell discontinuous transmission mechanism configured by the network device.

3. The method according to claim 1, wherein the first information is comprised in a first paging message; and
before the sending the first information to the terminal device, the method further comprises:
sending configuration information to the terminal device, wherein the configuration information indicates the first cell discontinuous transmission mechanism and/or the second cell discontinuous transmission mechanism configured by the network device.

4. The method according to claim 3, wherein the first paging message comprises a first activation instruction, and the first activation instruction is used to activate a cell discontinuous transmission mechanism corresponding to a first group; and
the first group comprises the terminal device, and the cell discontinuous transmission mechanism corresponding to the first group comprises the first cell discontinuous transmission mechanism and/or the second cell discontinuous transmission mechanism.

5. The method according to claim 3, wherein the first paging message comprises a second activation instruction, and the second activation instruction is used to activate cell discontinuous transmission mechanisms of a plurality of multicast services transmitted by the network device and/or cell discontinuous transmission mechanisms of a plurality of broadcast services transmitted by the network device; and
the first multicast service is comprised in the plurality of multicast services, and the first broadcast service is comprised in the plurality of broadcast services.

6. The method according to claim 3, wherein the first paging message comprises a third activation instruction and/or a fourth activation instruction, wherein
the third activation instruction is used to activate cell discontinuous transmission mechanisms of a plurality of multicast services transmitted by the network device, and the first multicast service is comprised in the plurality of multicast services; and
the fourth activation instruction is used to activate cell discontinuous transmission mechanisms of a plurality of broadcast services transmitted by the network device, and the first broadcast service is comprised in the plurality of broadcast services.

7. The method according to any one of claims 1 or 6, wherein after the sending the first information to the terminal device, the method further comprises:
sending a second paging message to the terminal device, wherein the second paging message is used to deactivate the first cell discontinuous transmission mechanism and/or the second cell discontinuous transmission mechanism.

8. The method according to claim 7, wherein the second paging message comprises a first deactivation instruction, and the first deactivation instruction is used to deactivate the cell discontinuous transmission mechanism corresponding to the first group; and
the first group comprises the terminal device, and the cell discontinuous transmission mechanism corresponding to the first group comprises the first cell discontinuous transmission mechanism and/or the second cell discontinuous transmission mechanism.

9. The method according to claim 7, wherein the second paging message comprises a second deactivation instruction, and the second deactivation instruction is used to deactivate the cell discontinuous transmission mechanisms of the plurality of multicast services transmitted by the network device and/or the cell discontinuous transmission mechanisms of the plurality of broadcast services transmitted by the network device; and
the first multicast service is comprised in the plurality of multicast services, and the first broadcast service is comprised in the plurality of broadcast services.

10. The method according to claim 7, wherein the second paging message comprises a third deactivation instruction and/or a fourth deactivation instruction, wherein
the third deactivation instruction is used to deactivate the cell discontinuous transmission mechanisms of the plurality of multicast services transmitted by the network device, and the first multicast service is comprised in the plurality of multicast services; and
the fourth deactivation instruction is used to deactivate the cell discontinuous transmission mechanisms of the plurality of broadcast services transmitted by the network device, and the first broadcast service is comprised in the plurality of broadcast services.

11. A communication method, wherein the method is applied to a terminal device, and the method comprises:
receiving first information from a network device, wherein the first information is used to activate a first cell discontinuous transmission mechanism of a first multicast service configured by the network device and/or a second cell discontinuous transmission mechanism of a first broadcast service configured by the network device.

12. The method according to claim 11, wherein the first information further comprises configuration information, and the configuration information indicates the first cell discontinuous transmission mechanism and/or the second cell discontinuous transmission mechanism configured by the network device.

13. The method according to claim 11, wherein the first information is comprised in a first paging message; and
before the receiving the first information from the network device, the method further comprises:
receiving configuration information from the network device, wherein the configuration information indicates the first cell discontinuous transmission mechanism and/or the second cell discontinuous transmission mechanism configured by the network device.

14. The method according to claim 13, wherein the first paging message comprises a first activation instruction, and the first activation instruction is used to activate a cell discontinuous transmission mechanism corresponding to a first group; and
the first group comprises the terminal device, and the cell discontinuous transmission mechanism corresponding to the first group comprises the first cell discontinuous transmission mechanism and/or the second cell discontinuous transmission mechanism.

15. The method according to claim 13, wherein the first paging message comprises a second activation instruction, and the second activation instruction is used to activate cell discontinuous transmission mechanisms of a plurality of multicast services transmitted by the network device and/or cell discontinuous transmission mechanisms of a plurality of broadcast services transmitted by the network device; and
the first multicast service is comprised in the plurality of multicast services, and the first broadcast service is comprised in the plurality of broadcast services.

16. The method according to claim 13, wherein the first paging message comprises a third activation instruction and/or a fourth activation instruction, wherein
the third activation instruction is used to activate cell discontinuous transmission mechanisms of a plurality of multicast services transmitted by the network device, and the first multicast service is comprised in the plurality of multicast services; and
the fourth activation instruction is used to activate cell discontinuous transmission mechanisms of a plurality of broadcast services transmitted by the network device, and the first broadcast service is comprised in the plurality of broadcast services.

17. The method according to any one of claims 11 to 16, wherein after the receiving the first information from the network device, the method further comprises:
receiving a second paging message from the network device, wherein the second paging message is used to deactivate the first cell discontinuous transmission mechanism and/or the second cell discontinuous transmission mechanism.

18. The method according to claim 17, wherein the second paging message comprises a first deactivation instruction, and the first deactivation instruction is used to deactivate the cell discontinuous transmission mechanism corresponding to the first group; and
the first group comprises the terminal device, and the cell discontinuous transmission mechanism corresponding to the first group comprises the first cell discontinuous transmission mechanism and/or the second cell discontinuous transmission mechanism.

19. The method according to claim 17, wherein the second paging message comprises a second deactivation instruction, and the second deactivation instruction is used to deactivate the cell discontinuous transmission mechanisms of the plurality of multicast services transmitted by the network device and/or the cell discontinuous transmission mechanisms of the plurality of broadcast services transmitted by the network device; and
the first multicast service is comprised in the plurality of multicast services, and the first broadcast service is comprised in the plurality of broadcast services.

20. The method according to claim 17, wherein the second paging message comprises a third deactivation instruction and/or a fourth deactivation instruction, wherein
the third deactivation instruction is used to deactivate the cell discontinuous transmission mechanisms of the plurality of multicast services transmitted by the network device, and the first multicast service is comprised in the plurality of multicast services; and
the fourth deactivation instruction is used to deactivate the cell discontinuous transmission mechanisms of the plurality of broadcast services transmitted by the network device, and the first broadcast service is comprised in the plurality of broadcast services.

21. A network device, comprising:
a transceiver unit, configured to send first information to a terminal device, wherein the first information is used to activate a first cell discontinuous transmission mechanism of a first multicast service configured by the network device and/or a second cell discontinuous transmission mechanism of a first broadcast service configured by the network device.

22. A terminal device, comprising:
a transceiver unit, configured to receive first information from a network device, wherein the first information is used to activate a first cell discontinuous transmission mechanism of a first multicast service configured by the network device and/or a second cell discontinuous transmission mechanism of a first broadcast service configured by the network device.

23. A communication apparatus, comprising a processor, wherein the processor is coupled to a memory; and
the memory stores instructions, and when the instructions are run on the processor, the communication apparatus is caused to implement the method according to any one of claims 1 to 10 or claims 11 to 20.

24. A computer-readable storage medium, wherein the computer-readable storage medium stores instructions, and when the instructions are run on a processor, the method according to any one of claims 1 to 10 or claims 11 to 20 is implemented.

25. A computer program product, wherein when the computer program product runs on a computer, the method according to any one of claims 1 to 10 or claims 11 to 20 is implemented.
